# EUROPEAN PATENT APPLICATION

(11) **EP 4 470 887 A1**
(43) Date of publication of application: **04.12.2024**
(21) Application number: 24178348.9
(22) Date of filing: 28.05.2024
(51) Int. Cl.: B62D 25/20, B62D 35/02

(54) **VEHICLE UNDERCARRIAGE COVER**

(30) Priority: 31.05.2023 JP 2023089468
(71) Applicant: Suzuki Motor Corporation, Shizuoka 432-8611 (JP)
(72) Inventor: IKOMA, Kyohei, Hamamatsu-Shi 432-8611 (JP); TAKEDA, Kazuma, Hamamatsu-Shi 432-8611 (JP); OKANO, Masaki, Hamamatsu-Shi 431-0201 (JP)
(74) Representative: Plasseraud IP

(57) **Abstract**

[Object] Provided is a vehicle undercarriage cover with which exhaust and drain functions can be enhanced without increasing air resistance.

[Means to Solve the Problems]A vehicle undercarriage cover (100) has a side wall (100A) and a lower wall (100B) that cover a side face and a lower face, respectively, of a motor (108) disposed underneath a floor of an electric vehicle (102). The undercarriage cover (100) has a plurality of recessed portions (120) extending in a vertical direction in the side wall (100A); and a slit (130) opening in a front wall of each of the recessed portions (120) and extends in the vertical direction.

## Description

### [Field of the Invention]

The present invention relates to a vehicle undercarriage cover.

### [Background of the Invention]

Patent Document 1 discloses an undercarriage cover that covers the lower side of a vehicle body, a drain hole being provided in a lower face of the undercarriage cover. Air flowing under the undercarriage cover while the vehicle is traveling is unlikely to flow into the undercarriage cover through the drain hole, while air in the undercarriage cover tends to be suctioned downward through the drain hole while the vehicle is traveling. Patent Document 1 states that this configuration makes it unlikely for water or the like to enter the interior of the undercarriage cover and improves draining efficiency.

In contrast, in the case of an electric vehicle (EV), for example, a motor serving as a driving device is provided under the floor at a rear portion of the vehicle, and is covered and protected from below by the undercarriage cover. When the electric vehicle travels through a puddle or the like, water may enter the interior of the undercarriage cover. Therefore, exhaust and drain functions of the undercarriage cover in electric vehicles need to be enhanced from the standpoint of protecting the motor.

### [Prior Art Documents]

### [Patent Documents]

[Patent Document 1] JP 2001-18852A

### [Summary of the Invention]

### [Problems to be Solved by the Invention]

However, the drain hole in the undercarriage cover of Patent Document 1 may cause air resistance while the vehicle is traveling, which may undermine the original effect of the undercarriage cover, i.e. the effect of reducing air resistance.

In view of the foregoing problem, the present invention aims to provide a vehicle undercarriage cover with which the exhaust and drain functions can be enhanced without increasing air resistance.

### [Means to Solve the Problems]

To solve the foregoing problem, a representative configuration of the present invention is characterized in a vehicle undercarriage cover including: a side wall and a lower wall for covering a side face and a lower face, respectively, of a driving device to be disposed underneath a floor of a vehicle, wherein the side wall has a plurality of recessed portions extending in a vertical direction, and each of the plurality of recessed portions has a slit opening in a front wall of the recessed portion and extends in the vertical direction.

### [Effect of the Invention]

According to the present invention, it is possible to provide a vehicle undercarriage cover with which the exhaust and drain functions can be enhanced without increasing air resistance.

### [Brief Explanation of the Drawings]

FIG. 1 is a bottom view of a vehicle to which an example of a vehicle undercarriage cover according to the present invention is applied.
FIG. 2 shows the undercarriage cover in FIG. 1 as viewed from a direction of an arrow Z.
FIG. 3 is an A-A cross-sectional view of the undercarriage cover in FIG. 2.
FIG. 4 is a B-B cross-sectional view of the undercarriage cover in FIG. 2.

### [Embodiments of the Invention]

One embodiment of the present invention is a vehicle undercarriage cover including: a side wall and a lower wall for covering a side face and a lower face, respectively, of a driving device to be disposed underneath a floor of a vehicle, wherein the side wall has a plurality of recessed portions extending in a vertical direction, and each of the plurality of recessed portions has a slit opening in a front wall of the recessed portion and extends in the vertical direction.

According to the present invention, the slits open toward the rear side of the vehicle in the front wall of the recessed portions in the side wall of the undercarriage cover. Wind flows on the outside, in the vehicle width direction, of the undercarriage cover during travel and produces negative pressure, thus allowing the air in the undercarriage cover to be also actively suctioned out through the slit. This configuration makes it possible to efficiently exhaust the air. In addition, the aforementioned negative pressure allows water that has entered the interior of the undercarriage cover to be efficiently drained through the slit.

According to the present invention, water is also prevented from entering from the outside to the inside of the undercarriage cover while the vehicle is traveling. That is, the slits opening toward the rear side of the vehicle provide a structure in which water and air flowing on the outside of the undercarriage cover rearward of the vehicle are unlikely to enter while the vehicle is traveling.

As described above, according to the present invention, the drain and exhaust functions of the undercarriage cover are enhanced, ventilation and heat exhaust can be conducted for the undercarriage cover, and the driving device covered by the undercarriage cover is prevented from being exposed to water.

Meanwhile, the slits according to the present invention open in the front wall of each recessed portion in the side wall of the undercarriage cover, and opens toward the rear side of the vehicle. Therefore, air resistance caused by the slits according to the present invention is significantly smaller than air resistance caused by, for example, a drain hole provided in a lower wall of an undercarriage cover.

In a side view, each of the recessed portions may have a trapezoidal shape whose dimension in front and back directions increases as the recessed portion extends downward.

According to the above configuration, the slits open toward the rear side of the vehicle while being inclined forward as the slit extends downward. This orientation of the slits makes it possible to further reduce water and foreign objects from entering the interior of the undercarriage cover during travel.

The side wall may be inclined inward in a vehicle width direction while extending downward, and may be inclined, in a vicinity of a lower end of the side wall, outward in the vehicle width direction while extending toward the lower end.

According to the above configuration, the region of the side wall of the undercarriage cover that is inclined inward in the vehicle width direction while extending downward makes it easier for adhered mud, snow, or the like, to fall down. Further, the area of the lower wall of the undercarriage cover is expanded by the region of the side wall of the undercarriage cover that is located in the vicinity of the lower end and inclined outward in the vehicle width direction while extending toward the lower end, thereby mitigating degradation in aerodynamic performance.

### Example

A preferable example of the present invention will be described in detail below with reference to the attached drawings. Dimensions, materials, other specific values, and the like described in this example are merely examples for facilitating understanding of the invention, and are not intended to limit the present invention unless stated otherwise. Note that in the present specification and drawings, elements having substantially the same functions and configurations are assigned the same reference numerals to omit redundant descriptions, and elements that are not directly related to the present invention are omitted in the drawings.

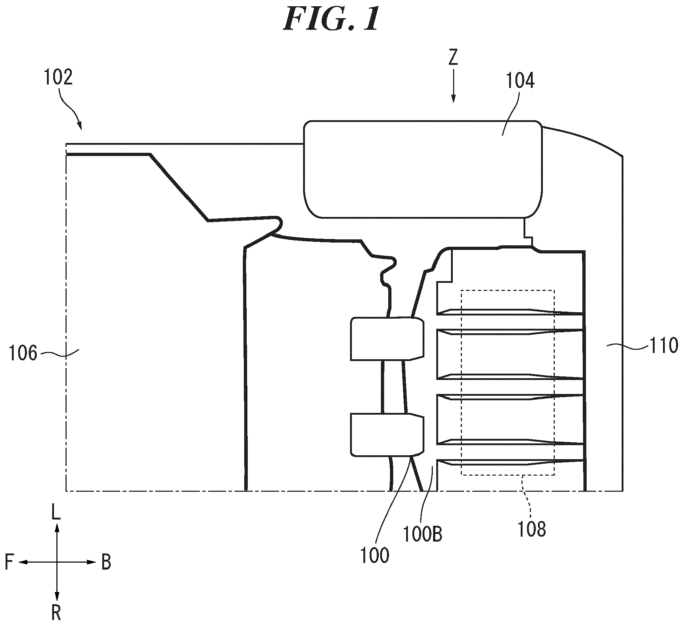

FIG. 1 is a bottom view of a vehicle to which an example of a vehicle undercarriage cover according to the present invention is applied. In FIG. 1 and all other drawings, arrows F (Forward) and B (Backward) indicate the front and back directions with respect to the vehicle, arrows L (Leftward) and R (Rightward) indicate a vehicle width direction, and arrows U (upward) and D (downward) indicate the vertical direction.

### Undercarriage cover

As shown in FIG. 1, an undercarriage cover 100 in this example is applied to an electric vehicle (EV) 102. FIG. 1 shows a region around a wheel arch 104 covering a left rear wheel (not shown) of the electric vehicle 102 as viewed from below. The electric vehicle 102 is equipped with a battery 106 underneath a floor at the center in the front and back directions with respect to the vehicle.

The undercarriage cover 100 has a side wall 100A and a lower wall 100B that cover a side face and a lower face, respectively, of a motor (driving device) 108 disposed underneath a floor at a rear portion of the vehicle. A front end and a rear end of the lower wall 100B partially overlap a lower face of the battery 106 and a lower face of a rear bumper 110, respectively, and are substantially continuous therewith.

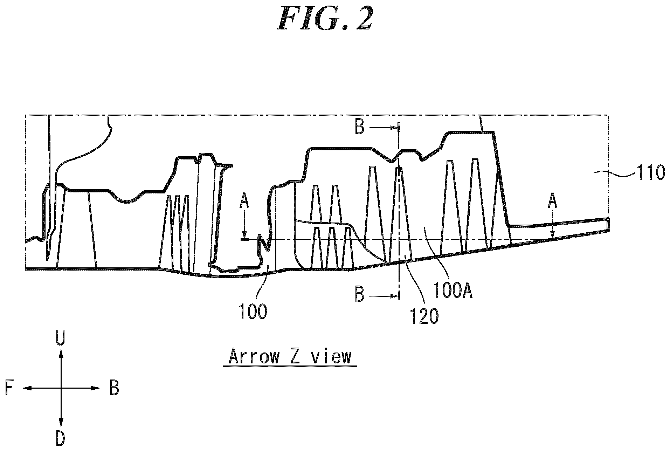

FIG. 2 shows the undercarriage cover 100 in FIG. 1 as viewed from the direction of the arrow Z. The side wall 100A of the undercarriage cover 100 is discontinued in the middle in the front and back directions with respect to the vehicle. As shown in FIG. 1, the undercarriage cover 100 covers the motor 108 in a region rearward of the location where the side wall 100A is discontinued, while covering a suspension device (not shown) in a region frontward of that location.

The undercarriage cover 100 covers both sides of the motor 108 with left and right side walls including the side wall 100A. Since the two side walls have the same configuration, the features of the undercarriage cover 100 are described below with reference to the left side wall 100A as a representative example.

### Recessed portions

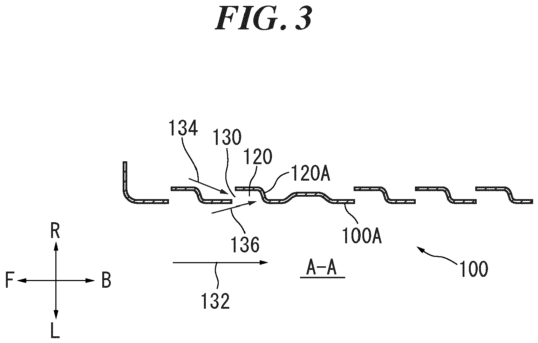

FIG. 3 is an A-A cross-sectional view of the undercarriage cover 100 in FIG. 2. As shown in FIGS. 2 and 3, the undercarriage cover 100 has a plurality of recessed portions that are recessed in the vertical direction in the side wall 100A. Since the recessed portions have the same configuration, the following description is given with reference to a recessed portion 120 as a representative example.

In the side view shown in FIG. 2, the recessed portion 120 has a trapezoidal shape whose dimension in the front and back directions increases as the recessed portion 120 extends downward. Note that the shape of the recessed portion 120 is not limited to a trapezoidal shape, and may also be a triangular shape or any other shape as long as the dimension in the front and back directions increases as the recessed portion 120 extends downward.

### Slit

As shown in FIG. 3, the undercarriage cover 100 has a slit 130 that opens in a front wall of the recessed portion 120 and extends in the vertical direction. The slit 130, which thus opens in the front wall of the recessed portion 120, consequently opens toward the rear side of the vehicle.

While the electric vehicle is traveling, wind flows on the outside, in the vehicle width direction, of the undercarriage cover 100, as indicated by an arrow 132, and produces negative pressure. Therefore, air in the undercarriage cover 100 is actively suctioned out through the slit 130, as indicated by an arrow 134. This configuration makes it possible to efficiently exhaust the air in the undercarriage cover 100. In addition, water that has entered the interior of the undercarriage cover 100 can also be efficiently drained through the slit 130, similarly as indicated by the arrow 134, due to the aforementioned negative pressure.

According to this example, water is also prevented from entering from the outside (left side of the vehicle in FIG. 3) to the inside (right side of the vehicle in FIG. 3) of the undercarriage cover 100 while the electric vehicle is traveling. That is, even if water or air flowing on the outside of the undercarriage cover 100 rearward of the vehicle enters the recessed portion 120 as indicated by an arrow 136 while the vehicle is traveling, the water or air merely hits a rear face 120A and is bounced off due to no hole being provided in the rear face 120A of the recessed portion 120. That is, the slit 130 provided in the front wall of the recessed portion 120 has a structure that makes it difficult for water and air to enter.

As described above, according to this example, the drain and exhaust functions of the undercarriage cover 100 are enhanced, ventilation and heat exhaust can be conducted for the undercarriage cover 100, and the motor 108 covered by the undercarriage cover 100 is prevented from being exposed to water.

Meanwhile, the slit 130 according to this example opens in the front wall of the recessed portion 120 in the side wall 100A of the undercarriage cover 100, and opens toward the rear side of the vehicle. Therefore, air resistance caused by the slit 130 of this example is significantly smaller than air resistance caused in the case of providing a drain hole installed in the lower wall 100B (FIG. 1) of the undercarriage cover 100.

Further, with the recessed portion 120 having a trapezoidal shape as shown in FIG. 2, the slit 130, which is provided in the front wall of the recessed portion 120, is inclined forward while extending downward. This orientation of the slit 130 more sufficiently prevents water and foreign objects from entering the interior of the undercarriage cover 100 during travel.

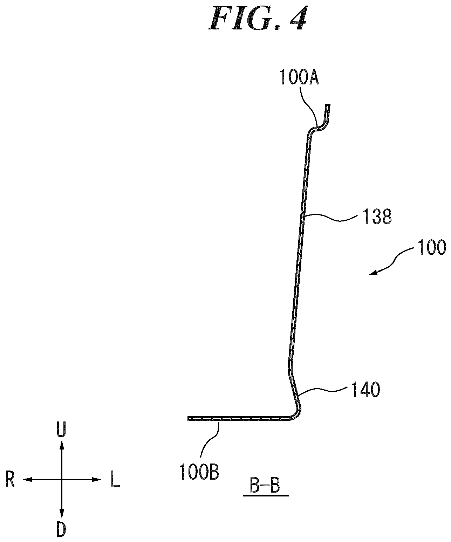

FIG. 4 is a B-B cross-sectional view of the undercarriage cover 100 in FIG. 2. As shown in FIG. 4, the side wall 100A of the undercarriage cover 100, including the recessed portion 120, has a region 138 that is inclined inward in the vehicle width direction while extending downward. Further, in a vicinity 140 of the lower end of the side wall 100A, the undercarriage cover 100 is inclined outward in the vehicle width direction while extending toward the lower end.

According to this configuration, the region 138 of the side wall 100A of the undercarriage cover 100 that is inclined inward in the vehicle width direction while extending downward makes it easier for adhered mud, snow, and the like, to fall down. Further, the area of the lower wall 100B of the undercarriage cover 100 is expanded by the region of the side wall 100A of the undercarriage cover 100 that is located in the vicinity 140 of the lower end, i.e. inclined outward in the vehicle width direction while extending toward the lower end. This configuration can mitigate degradation in aerodynamic performance.

Although a preferable embodiment of the present invention has been described above with reference to the attached drawings, the present invention is, needless to say, not limited to the above-described example. It is apparent that a person skilled in the art may conceive various variations and modifications within the scope of the claims, and those variations and modifications should be understood to be naturally encompassed in the technical scope of the present invention.

In the present invention, the inventions described in the claims and the example can be freely combined with each other when implemented, regardless of the dependency of the claims.

### [Industrial Applicability]

The present invention can be used in a vehicle undercarriage cover.

### [Index to the Reference Numerals]

100 ... Undercarriage cover; 100A ... Side wall of undercarriage cover; 100B ... Lower wall of undercarriage cover; 102 ... Electric vehicle; 106 ... Battery; 108 ... Motor; 110 ... Rear bumper; 120 ... Recessed portion; 130 ... Slit; 138 ... Region of side wall of undercarriage cover; 140 ... Vicinity of lower end of side wall of undercarriage cover

## Claims

1. A vehicle undercarriage cover (100) comprising:
a side wall (100A) and a lower wall (100B) for covering a side face and a lower face, respectively, of a driving device (108) to be disposed underneath a floor of a vehicle,
wherein the side wall (100A) has a plurality of recessed portions (120) extending in a vertical direction, and
each of the plurality of recessed portions (120) has a slit (130) opening in a front wall of the recessed portion (120) and extends in the vertical direction.

2. The vehicle undercarriage cover (100) according to claim 1,
wherein in a side view, each of the recessed portions (120) has a trapezoidal shape whose dimension in front and back directions increases as the recessed portion (120) extends downward.

3. The vehicle undercarriage cover (100) according to claim 1 or 2,
wherein the side wall (100A) is inclined inward in a vehicle width direction while extending downward, and is inclined, in a vicinity (140) of a lower end of the side wall (100A), outward in the vehicle width direction while extending toward the lower end.
